# EUROPÄISCHE PATENTSCHRIFT

(11) **EP 2 185 602 B1**
(45) Veröffentlichungstag und Bekanntmachung des Hinweises auf die Patenterteilung: **08.06.2011**
(21) Anmeldenummer: 07820040.9
(22) Anmeldetag: 05.09.2007
(51) Int. Cl.: C08F 8/28

(54) **VERFAHREN ZUR HERSTELLUNG VON POLYVINYLACETALEN MIT NIEDRIGEM RESTALDEHYDGEHALT IM ABWASSER**
METHOD FOR THE PRODUCTION OF POLYVINYL ACETALS HAVING LOW RESIDUAL ALDEHYDE CONTENT IN WASTE WATER
PROCÉDÉ DE PRODUCTION D'ACÉTALS DE POLYVINYLE À FAIBLE TENEUR EN ALDÉHYDE RÉSIDUEL DANS DES EAUX USÉES

(43) Veröffentlichungstag der Anmeldung: 19.05.2010
(73) Patentinhaber: Kuraray Europe GmbH, 65926 Frankfurt am Main (DE)
(72) Erfinder: PAPENFUHS, Bernd, 63179 Obertshausen (DE)
(74) Vertreter: Kisters, Michael Marcus
(86) Internationale Anmeldenummer: PCT/EP2007/059285
(87) Internationale Veröffentlichungsnummer: WO 2009/030274

(56) Entgegenhaltungen:
- DATABASE WPI Week 200212 Derwent Publications Ltd., London, GB; AN 2002-086171 XP002480998 & JP 2001 288215 A (SEKISUI CHEM IND CO LTD) 16. Oktober 2001 (2001-10-16)
- DATABASE WPI Week 200039 Derwent Publications Ltd., London, GB; AN 2000-446915 XP002480999 & JP 2000 159831 A (SEKISUI CHEM IND CO LTD) 13. Juni 2000 (2000-06-13)

## Beschreibung

Die vorliegende Erfindung betrifft ein Verfahren zur Herstellung von Polyvinylacetalen mit verringertem Restaldehydgehalt im anfallenden Abwasser.

### Technisches Gebiet

Bei der Herstellung von Polyvinylacetalen durch Reaktion von Polyvinylalkoholen mit Aldehyden wird die Reaktion üblicherweise im wässrigen Medium durchgeführt, da die eingesetzten Polyvinylalkohole meist wasserlöslich sind, während das Zielprodukt Polyvinylacetal nach erfolgter Umsetzung als Feststoff aus diesem Reaktionsmedium ausfällt.

Nicht umgesetzter Aldehyd verbleibt im Reaktionsmedium oder wird mit dem Polyvinylacetal ausgefällt. Insbesondere zum Erhalt von Polyvinylacetalen mit hohen Acetalisierungsgraden ist die Verwendung von Aldehydüberschüssen notwenig. Dies hat zur Folge, dass im Abwasser der Umsetzung erhebliche Mengen an nicht mit dem Polyvinylalkohol zur Reaktion gebrachtem Aldehyd verbleiben, was eine unerwünschte Abwasserbelastung darstellt. Diese Abwässer müssen zwecks Reinigung einer Kläranlage zugeführt werden, was von ihrem Aldehydgehalt abhängige Kosten verursacht.

### Stand der Technik

Zum Erhalt eines möglichst vollständigen Aldehydumsatzes bei der Acetalisierung von Polyvinylalkoholen wurden bereits viele Verfahrensvarianten diskutiert. So beschreiben z.B. DE 10 2004 054569 A1, DE 10 2004 054 568 A1, JP-A 2001-288215 und JP-A 2000-159831 Verfahren mit einer stufenweisen Zugabe der Reaktanden, um einen vollständigen Umsatz der Aldehyde zu erzielen.

Diese Verfahren weisen eine komplizierte Reaktionsführung mit einer auf ein Temperaturprofil abgestimmten, stufenweisen Zugabe von Polyvinylalkohol, Aldehyd und Säurekatalysator auf.

### Aufgabe

Aufgabe der vorliegenden Erfindung war es daher, ein einfaches und von bestehenden Verfahren zur Herstellung von Polyvinylacetalen abgeleitetes Verfahren bereit zu stellen, mit dem eine geringere Abwasserbelastung durch Aldehyde erreicht werden kann.

### Darstellung der Erfindung

Gegenstand der vorliegenden Erfindung ist ein Verfahren zur Herstellung von Polyvinylacetalen durch säurekatalysierte Umsetzung von einem oder mehreren Polyvinylalkoholen mit einem oder mehreren Aldehyden, wobei das gebildete Polyvinylacetal aus dem Reaktionsmedium ausfällt, dadurch gekennzeichnet, dass erst nach dem Ausfallen des Polyvinylacetals 0,1 bis 50 Gew.% Polyvinylalkohol, bezogen auf die Gesamtmenge an eingesetztem Polyvinylalkohol, zugegeben werden.

Die erfindungsgemäße Zugabe des Polyvinylalkohols nach dem Ausfallen des Polyvinylacetals kann im Prinzip im Anschluss an jedes aus dem Stand der Technik bekannte Verfahren zur Herstellung von Polyvinylacetalen durchgeführt werden. Entscheidend ist lediglich, dass die gebildeten Polyvinylacetale vor Nachgabe des Polyvinylalkohols aus dem Reaktionsmedium ausgefallen sind und der nachträglich zugesetzte Polyvinylalkohol in diesem Reaktionsmedium löslich ist.

Die Reaktion der in der Polyvinylacetal-Suspension verbleibenden Aldehyde mit dem nachgegebenen Polyvinylalkohol wird im Folgenden als Nachreaktion bezeichnet.

Die in der Nachreaktion zugegebene Menge an Polyvinylalkohol wird auf die Gesamtmenge des eingesetzten Polyvinylalkohols, d.h. auf die Summe der in der Umsetzung bis zum Ausfallen des Polyvinylacetals und der in der Nachreaktion eingesetzten Menge an Polyvinylalkohol, bezogen.

Die Menge der in der Nachreaktion eingesetzten Polyvinylalkohole beträgt 0,1 bis 50 Gew.%, bevorzugt 1 bis 30 Gew.%, und insbesondere 5 bis 20 Gew.% der Gesamtmenge an eingesetzten Polyvinylalkoholen.

Das erfindungsgemäße Verfahren ermöglicht, in Abhängigkeit von den Bedingungen der erfindungsgemäßen Nachreaktion und des dafür verwendeten Aldehydanteils eine Reduktion des Aldehydgehaltes des Filtrats der Polyvinylacetal-Suspension bzw. des Abwassers der Acetalisierungsreaktion um bis zu 10 %, bevorzugt bis zu 20 %, insbesondere bis zu 30 %. Die erfindungsgemäße Reduktion des Aldehydgehaltes bestimmt sich aus der Differenz der Aldehydgehalte im Filtrat der Polyvinylacetal-Suspension, die mit bzw. ohne Nachgabe einer Polyvinylalkohol-Teilmenge erhalten wurde.

Die Bestimmung des Aldehydgehaltes im Filtrat der Polyvinylacetal-Suspension erfolgt bevorzugt mittels Gaschromatographie.

Im erfindungsgemäßen Verfahren ist es möglich, dass die zur primären Umsetzung mit den Aldehyden und die nach Ausfallen des Polyvinylacetals (in der Nachreaktion) eingesetzten Polyvinylalkohole die gleiche chemische Zusammensetzung besitzen; sie können jedoch auch eine unterschiedliche chemische Zusammensetzung aufweisen.

Im erfindungsgemäßen Verfahren werden zur Umsetzung mit den Aldehyden und/oder in der Nachreaktion bevorzugt Polyvinylalkohole mit einer Viskosität von 2,0 bis 35,0 mPas (gemessen als 4,0 Gew.% wässrige Lösung nach Hoeppler bei 20 °C gemäß DIN 53015) und/oder einem Hydrolysegrad von mindestens 80 Mol%, bevorzugt 80 bis 99,8 Mol%, eingesetzt.

Zur Vervollständigung der Nachreaktion ist es vorteilhaft, die Polyvinylacetal-Suspension nach Zugabe des Polyvinylalkohols noch mindestens 5 min. nachzurühren. Empfehlenswert als Reaktionstemperaturen der Nachreaktion sind Temperaturen von mindestens 25 °C, insbesondere mindestens 50 °C und bevorzugt mindestens 70 °C. Die Reaktionsdauer und -temperatur der Nachreaktion richten sich nach dem Molekulargewicht des Polyvinylacetals und der gewünschten Reduktion des Restaldehydgehalts.

In einer bevorzugten Ausführung der vorliegenden Erfindung erfolgt die Nachgabe des Polyvinylalkohols in Form einer wässrigen Lösung desselben.

Eine weitere bevorzugte Ausführung des erfindungsgemäßen Verfahrens besteht in der Mitverwendung bzw. in der ausschließlichen Verwendung von Vinylalkohol-Copolymeren z.B. Ethylen/Vinylalkohol-Copolymeren, als Acetalisierungskomponente und/oder in der Nachreaktion.

Im erfindungsgemäßen Verfahren wird als Aldehyd bevorzugt Formaldehyd, Acetaldehyd, Propionaldehyd oder n-Butyraldehyd jeweils alleine oder als Mischung verwendet, wobei der Einsatz von n-Butyraldehyd die größte wirtschaftliche Bedeutung hat.

### Beispiele

Die nachfolgenden Beispiele 1 bis 3 dienen zur weiteren Erläuterung der Erfindung, ohne diese in irgendeiner Form einzuschränken. Das Vergleichsbeispiel beschreibt die Herstellung eines Polyvinylacetals gemäß dem Stand der Technik.

Als Polymer-Rohstoff für sämtliche Beispiele und das Vergleichsbeispiel wurde ein Polyvinylalkohol mit einem Gehalt an Acetyl-Gruppen von 1.0 mol-%, einem Gehalt an Vinylalkohol-Gruppen von 99.0 mol-% und einer Viskosität nach Höppler von 26.6 mPas eingesetzt (gemessen als 4.0%-ige wässrige Lösung nach DIN 53015).

### Beispiel 1

5700g einer 10.58%-igen wässrigen Polyvinylalkohol-Lösung wurden in einem 10 Liter Glasreaktor vorgelegt und mit 1053g destilliertem Wasser verdünnt. Anschließend wurde unter Rühren bis zum Erreichen von 90°C Innentemperatur erhitzt und dann abgekühlt. Bei 40°C wurden innerhalb von 5 Minuten 363.1g n-Butyraldehyd zugegeben und weiter abgekühlt. Bei 14°C wurden innerhalb von 5 Minuten 531 ml 20%-ige Salzsäure zugetropft; 5 Minuten nach der Säure-Zugabe fiel das Produkt als farbloser Niederschlag aus der Reaktionslösung aus. 5 Minuten nach dem Ausfallen des Polyvinylacetals wurden innerhalb von 5 Minuten 300g der oben genannten Polyvinylalkohol-Lösung zugegeben. Anschließend wurde die Suspension innerhalb von 90 Minuten linear auf 65°C erwärmt und 180 Minuten unter fortgesetztem Rühren bei dieser Temperatur gehalten.

Danach wurde der Produkt-Niederschlag abfiltriert und das Filtrat gaschromatographisch auf seinen Gehalt an n-Butyraldehyd hin untersucht.

Das erhaltene Polyvinylacetal wies einen Gehalt von 20.7 Gew.-% Vinylalkohol-Einheiten auf.

### Beispiel 2

5100g einer 10.58%-igen wässrigen Polyvinylalkohol-Lösung wurden in einem 10 Liter Glasreaktor vorgelegt und mit 1053g destilliertem Wasser verdünnt. Anschließend wurde unter Rühren bis zum Erreichen von 90°C Innentemperatur erhitzt und dann abgekühlt. Bei 40°C wurden innerhalb von 5 Minuten 363.1g n-Butyraldehyd zugegeben und weiter abgekühlt. Bei 14°C wurden innerhalb von 5 Minuten 531 ml 20%-ige Salzsäure zugetropft; 3 Minuten nach der Säure-Zugabe fiel das Produkt als farbloser Niederschlag aus der Reaktionslösung aus. 5 Minuten nach dem Ausfallen des Polyvinylacetals wurden innerhalb von 5 Minuten 900g der oben genannten Polyvinylalkohol-Lösung zugegeben. Anschließend wurde die Suspension innerhalb von 90 Minuten linear auf 65°C erwärmt und 180 Minuten unter fortgesetztem Rühren bei dieser Temperatur gehalten.

Danach wurde der Produkt-Niederschlag abfiltriert und das Filtrat gaschromatographisch auf seinen Gehalt an n-Butyraldehyd hin untersucht.

Das erhaltene Polyvinylacetal wies einen Gehalt von 20.5 Gew.-% Vinylalkohol-Einheiten auf.

### Beispiel 3

4200g einer 10.58%-igen wässrigen Polyvinylalkohol-Lösung wurden in einem 10 Liter Glasreaktor vorgelegt und mit 1053g destilliertem Wasser verdünnt. Anschließend wurde unter Rühren bis zum Erreichen von 90°C Innentemperatur erhitzt und dann abgekühlt. Bei 40°C wurden innerhalb von 5 Minuten 363.1g n-Butyraldehyd zugegeben und weiter abgekühlt. Bei 14°C wurden innerhalb von 5 Minuten 531 ml 20%-ige Salzsäure zugetropft; unmittelbar nach der Säure-Zugabe fiel das Produkt als farbloser Niederschlag aus der Reaktionslösung aus. 5 Minuten nach dem Ausfallen des Polyvinylacetals wurden innerhalb von 5 Minuten 1800g der oben genannten Polyvinylalkohol-Lösung zugegeben. Anschließend wurde die Suspension innerhalb von 90 Minuten linear auf 65°C erwärmt und 180 Minuten unter fortgesetztem Rühren bei dieser Temperatur gehalten.

Danach wurde der Produkt-Niederschlag abfiltriert und das Filtrat gaschromatographisch auf seinen Gehalt an n-Butyraldehyd hin untersucht.

Das erhaltene Polyvinylacetal wies einen Gehalt von 20.5 Gew.-% Vinylalkohol-Einheiten auf.

### Vergleichsbeispiel

Die Herstellung des Polyvinylacetals erfolgte analog den Beispielen 1 bis 3, mit dem Unterschied, dass die bei den Beispielen für die erfindungsgemäße Nachgabe verwendete Polyvinylalkohol-Teilmenge mit der Hauptmenge vorgelegt wurde (Vorlage von 6000g der wäßrigen Polyvinylalkohol-Lösung).

Das erhaltene Polyvinylacetal, dessen Filtrat gaschromatographisch auf seinen n-Butyr-aldehyd-Gehalt hin untersucht wurde, wies einen Gehalt von 20.8 Gew.-% Vinylalkohol-Einheiten auf.

### Bestimmungsmethoden

### 1. Bestimmung der Viskosität der Polyvinylalkohol-Lösungen

96.00 +/- 0.01 g destilliertes Wasser und 4.00 +/- 0.01 g Polyvinylalkohol wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53015; Methode nach Höppler) bei 20°C mit einer geeigneten Kugel bestimmt.

### 2. Bestimmung des Gehalts an Acetyl-Gruppen von Polyvinylalkoholen

Eine eingestellte wässrige Lösung des zu analysierenden Polyvinylalkohols wurde zunächst unter Verwendung eines Kaliumhydroxid-Überschusses einer alkalischen Esterhydrolyse unterzogen; anschließend wurde der KOH-Überschuss mit Salzsäure zurücktitriert.

### 3. Bestimmung des Gehalts an Vinylalkohol-Einheiten von Polyvinylacetalen

Der Gehalt an Vinylalkohol-Einheiten in den Polyvinylacetalen wurde durch Acetylierung der Hydroxyl-Gruppen mit Essigsäureanhydrid in Gegenwart von Pyridin ermittelt. Dazu wurden 1.500 g +/- 0.001 g Polyvinylacetal eingewogen (bei den Weichmacher-haltigen Produkten ensprechend mehr) und 10 ml einer Pyridin/Essigsäureanhydrid-Mischung (77:23) zugegeben. Nach ca. 14-stündiger Lagerung der gut verschlossenen Analysenprobe bei 50°C wurden bei Raumtemperatur 25 ml 1.2-Dichlorethan und 3 ml destilliertes Wasser zugegeben und eine Stunde lang stehen gelassen. Nach Auffüllen der Probe mit destilliertem Wasser auf ein Gesamtvolumen von 160 ml wurde unter schnellem Rühren gegen Natronlauge titriert.

### 4. Bestimmung des Gehalts an n-Butyraldehyd von Polyvinylacetal-Filtraten (Abwasser)

Die Quantifizierung erfolgte durch Headspace-GC-Analyse mittels eines Gaschromatographen des Typs Agilent 6890, ausgerüstet mit einem HS-Sampler CTC Analytics COMBI PAL und einer 60m-Trennsäule FS-DB1 (100% Dimethylpolysiloxan, Trägergas: Wasserstoff).

### Ergebnisse

Folgende Gehalte an n-Butyraldehyd wurden in den Polyvinylacetal-Filtraten bzw. den Produkt-Abwässern gemessen.

| | |
|---|---|
| Vergleichsbeispiel: | 1000 ppm |
| Beispiel 1: | 900 ppm |
| Beispiel 2: | 800 ppm |
| Beispiel 3: | 750 ppm |

## Patentansprüche

1. Verfahren zur Herstellung von Polyvinylacetalen durch säurekatalysierte Umsetzung von einem oder mehreren Polyvinylalkoholen mit einem oder mehreren Aldehyden, wobei das gebildete Polyvinylacetal aus dem Reaktionsmedium ausfällt, **dadurch gekennzeichnet, dass** nach dem Ausfallen des Polyvinylacetals 0,1 bis 50 Gew.% Polyvinylalkohol, bezogen auf die eingesetzte Gesamtmenge an Polyvinylalkohol, zugegeben werden.

2. Verfahren nach Anspruch 1, **dadurch gekennzeichnet, dass** die nach dem Ausfallen des Polyvinylacetals zugegebenen Polyvinylalkohole eine Viskosität von 2,0 bis 35,0 mPas (gemessen als 4,0 Gew.% wässrige Lösung nach Hoeppler bei 20 °C gemäß DIN 53015) aufweisen.

3. Verfahren nach Anspruch 1 oder 2, **dadurch gekennzeichnet, dass** die vor und nach dem Ausfallen des Polyvinylacetals zugegebenen Polyvinylalkohole die gleiche chemische Zusammensetzung besitzen.

4. Verfahren nach einem der Ansprüche 1 bis 3, **dadurch gekennzeichnet, dass** die Nachgabe des Polyvinylalkohols in Form einer wässrigen Lösung erfolgt.

5. Verfahren nach einem der Ansprüche 1 bis 4, **dadurch gekennzeichnet, dass** als Aldehyd n-Butyraldehyd eingesetzt wird.

## Claims

1. A method for producing polyvinyl acetals by acid-catalysed reaction of one or more polyvinyl alcohols with one or more aldehydes, the polyvinyl acetal formed precipitating from the reaction medium, **characterised in that**, after precipitation of the polyvinyl acetal, 0.1 to 50 % by weight of polyvinyl alcohol is added based on the total amount of polyvinyl alcohol used.

2. The method according to claim 1, **characterised in that** the polyvinyl alcohols added after precipitation of the polyvinyl acetal have a viscosity of 2.0 to 35.0 mPas (measured as 4.0 % by weight aqueous solution according to Hoeppler at 20 °C in accordance with DIN 53015).

3. The method according to either claim 1 or claim 2, **characterised in that** the polyvinyl alcohols added before and after precipitation of the polyvinyl acetal have the same chemical composition.

4. The method according to any one of claims 1 to 3, **characterised in that** the polyvinyl alcohol is added in the form of an aqueous solution.

5. The method according to any one of claims 1 to 4, **characterised in that** n-butyraldehyde is used as aldehyde.

## Revendications

1. Procédé de préparation d'acétals de polyvinyle en faisant réagir, en présence d'un acide à action catalytique, un ou plusieurs alcools polyvinyliques avec un ou plusieurs aldéhydes, l'acétal de polyvinyle ainsi formé se séparant du milieu de réaction par précipitation, **caractérisé en ce que**, suite à la précipitation de l'acétal de polyvinyle, on ajoute 0,1 à 50 % en poids d'alcool polyvinylique, par rapport la quantité totale d'alcool polyvinylique mise en oeuvre.

2. Procédé selon la revendication 1, **caractérisé en ce que** les alcools polyvinyliques ajoutés suite à la précipitation de l'acétal de polyvinyle présentent une viscosité comprise entre 2,0 et 35,0 mPas (mesurée sur une solution aqueuse à 4,0 % en poids selon Hoeppler à 20 °C, conformément à DIN 53015) .

3. Procédé selon les revendications 1 ou 2, **caractérisé en ce que** les alcools polyvinyliques ajoutés avant et après la précipitation de l'acétal de polyvinyle possèdent la même composition chimique.

4. Procédé selon l'une des revendications 1 à 3, **caractérisé en ce que** l'ajout ultérieur de l'alcool polyvinylique est réalisé sous forme d'une solution aqueuse.

5. Procédé selon l'une des revendications 1 à 4, **caractérisé en ce que** ledit aldéhyde mis en oeuvre est le n-butyraldéhyde.
